# EUROPEAN PATENT SPECIFICATION

(11) **EP 1 936 139 B1**
(45) Date of publication and mention of the grant of the patent: **22.07.2009**
(21) Application number: 07122808.4
(22) Date of filing: 11.12.2007
(51) Int. Cl.: F01N 9/00, F01N 11/00

(54) **Differential pressure calculating device and method for calculating differential pressure between the upstream section and the downstream section of filter, and deposition amount estimating device and method for estimating deposition amount of particulate matter on the filter**
Vorrichtung zur Berechnung des Differenzdrucks und Verfahren zur Berechnung des Differzdrucks zwischen dem Upstream-Abschnitt und dem Downstream-Abschnitt eines Filters sowie Vorrichtung zur Schätzung der Ablagerungsmenge und Verfahren zur Schätzung der Ablagerungsmenge auf dem Filter
Dispositif de calcul de la pression différentielle et procédé pour le calcul de la pression différentielle entre la section en amont et la section en aval du filtre, et dispositif d'évaluation de la quantité de dépôt et procédé pour l'évaluation de la quantité de dépôt de matières particulaires sur le filtre

(30) Priority: 12.12.2006 JP 2006334754
(43) Date of publication of application: 25.06.2008
(73) Proprietor: Toyota Jidosha Kabushiki Kaisha, Toyota-shi, Aichi 471-8571 (JP)
(72) Inventor: Katayama, Masanobu, Toyota-shi, Aichi-ken, 471-8571 (JP); Otsubo, Yasuhiko, Toyota-shi, Aichi-ken, 471-8571 (JP)
(74) Representative: Winter, Brandl, Fürniss, Hübner Röss, Kaiser, Polte Partnerschaft Patent- und Rechtsanwaltskanzlei

(56) References cited:
- EP-A- 1 464 817
- US-A1- 2006 196 167

## Description

### BACKGROUND OF THE INVENTION

### 1. Field of Invention

The present invention is applied to an exhaust gas purification system, which includes a filter for trapping particulate matter contained in exhaust gas of an internal combustion engine, and relates to a technique for calculating a differential pressure between the upstream section and the downstream section of this filter, and to a technique for estimating the deposition amount of particulate matter on this filter.

### 2. Description of Related Art

Some internal combustion engines such as an automotive diesel engine are equipped with an exhaust gas purification system having a filter arranged in the exhaust passage thereof to trap particulate matter (PM). An increase in the amount of PM deposited on this filter leads to a rise in pressure in the exhaust passage, causing such problems as deterioration of fuel efficiency. Accordingly, an exhaust gas purification system of this type is adapted to perform so-called filter regeneration, whereby additional fuel injection such as post-injection is performed when it is estimated that the deposition amount of PM on the filter has become excessive, thereby burning and removing PM trapped on the filter.
To estimate the deposition amount of PM on a filter, as described in, for example, Japanese Patent Application Publication No.9-256837 (JP-A-9-256837), there is used a particle tapping state detecting device that detects the deposition amount of PM on the basis of a differential pressure between the upstream section and the downstream section of the filter.
The diesel particulate filter disclosed in European Patent Application EP 1 081 347 shows a differential pressure between an upstream section and a downstream section of a particulate filter, which is calculated on the basis of a detected pressure upstream of the filter and an estimated pressure downstream of the filter. The pressure downstream of the filter is estimated from a total pressure loss in the exhaust passage on the downstream side of the filter. This total pressure loss is derived from maps, which indicate a relation between the pressure loss and the intake air amount and the exhaust gas temperature.
The detecting device disclosed in Japanese Patent Application Publication No. 9-256837 (JP-A-9-256837) includes a vent part communicated with the upstream side of the filter, and detects a pressure upstream of the filter through this vent part during operation of an internal combustion engine. Since the downstream side of the filter is communicated with the atmosphere, the atmospheric pressure can be used in place of the pressure downstream of the filter when no exhaust gas is flowing in the exhaust passage. This detecting device thus uses the atmospheric pressure as the pressure downstream of the filter. Specifically, by taking advantage of the fact that the vent part is also communicated with the downstream side of the filter via the filter, this detecting device detects the atmospheric pressure in advance through this vent part at the start-up of the internal combustion engine when no exhaust gas is flowing. Then, this detecting device calculates a differential pressure of the filter from the pressure upstream of the filter during operation of the internal combustion engine detected in this way and the downstream pressure (atmospheric pressure) at the start-up of the internal combustion engine, thereby estimating the deposition amount of PM trapped on the filter.
During operation of an internal combustion engine, the pressure downstream of a filter is affected by the configuration of an exhaust passage on the downstream side of this filter, the operating state of the internal combustion engine, and the like. In recent years, in particular, there has been employed a configuration in which an exhaust throttle valve is provided in an exhaust passage on the downstream side of a filter to variably control the channel cross-sectional area of this exhaust passage, thereby achieving improved efficiency of filter regeneration, engine warm-up in cold climate areas, and the like. The configuration of the exhaust passage that has thus become more complex affects the pressure downstream of the filter even more.
However, the particle trapping state detecting device disclosed in Japanese Patent Application Publication No. 9-256837 (JP-A-9-256837) simply uses the pressure at the start-up of the internal combustion engine as the pressure downstream of the filter, and the above-described configuration of the exhaust passage and the operating state of the internal combustion engine are not taken into consideration whatsoever. Therefore, a divergence may arise between the pressure at start-up and the actual pressure downstream of the filter during operation. For this reason, it may become impossible to accurately calculate a differential pressure between the upstream section and the downstream section of the filter, which may also lead to a decrease in the reliability of the value of PM deposition amount estimated on the basis of this differential pressure.
A decrease in the reliability of the estimated value of PM deposition amount may even give rise to the following problems related to filter regeneration control.
In the case of an exhaust gas purification system in which filter regeneration control is started when the deposition amount of PM on a filter has reached a predetermined value, situations may occur in which filter regeneration control is started even through the deposition amount of PM on the filter has not reached the predetermined value, or in which filter regeneration control is not started even through the deposition amount of PM has exceeded the predetermined value.
In the case of an exhaust gas purification system in which the deposition amount of PM is estimated during regeneration control of a filter on the basis of the differential pressure of the filter, and to what extent the filter has been regenerated is determined on the basis of this estimated value to thereby determine the timing of terminating filter regeneration control, situations may occur in which filter regeneration control is terminated even though the filter has not been fully regenerated, or in which filter regeneration control is continued even though the filter has been fully regenerated.

### SUMMARY OF THE INVENTION

It is an object of the present invention to provide a technique that makes it possible to accurately calculate a differential pressure between the upstream section and the downstream section of a filter that traps particulate matter contained in exhaust gas of an internal combustion engine, and a technique that makes it possible to accurately estimate the deposition amount of particulate matter on this filter.
A first aspect of the present invention relates to a differential pressure calculating device for calculating a differential pressure between an upstream section and a downstream section of a filter in an exhaust gas purification system, the exhaust gas purification system including a filter that is arranged in an exhaust passage of an internal combustion engine and traps particulate matter discharged from the internal combustion engine, and an exhaust throttle valve that is arranged on the downstream side of the filter in the exhaust passage and variably controls a channel cross-sectional area of the exhaust passage. This differential pressure calculating device includes: pressure detecting means for detecting a pressure upstream of the filter; pressure estimating means for estimating a pressure downstream of the filter from a total pressure loss in an exhaust passage on the downstream side of the filter by individually deriving a first pressure loss and a second pressure loss, the first pressure loss being a pressure loss in a predetermined section from upstream to downstream of the exhaust throttle valve in the exhaust passage on the downstream side of the filter, the second pressure loss being a pressure loss in a section other than the predetermined section in the exhaust passage on the downstream side of the filter; and calculating means for calculating a differential pressure between the upstream section and the downstream section of the filter from the detected pressure upstream of the filter and the estimated pressure downstream of the filter.
The pressure estimating means may estimate the pressure downstream of the filter by adding the total pressure loss to an atmospheric pressure.
As described above, the pressure downstream of the filter during operation of the internal combustion engine is a value that is larger than the atmospheric pressure by a total pressure loss that occurs as exhaust gas flows through the exhaust passage on the downstream side of the filter.
The exhaust throttle valve is provided in the exhaust passage on the downstream side of the filter. The pressure loss in the predetermined section from the upstream section to the downstream section of this exhaust throttle valve is affected by the characteristics and actuation state of this valve. In this regard, according to the above-mentioned configuration, the pressure estimating means derives the first pressure loss representing a pressure loss in this predetermined section, and the second pressure loss representing a pressure loss in a section other than the predetermined section individually, thereby making it possible to more accurately calculate the total pressure loss in the exhaust passage on the downstream side of the filter. Accordingly, the pressure downstream of the filter estimated by the pressure estimating means is consistent with the actual pressure downstream of the filter. That is, according to the above-mentioned configuration, since an improvement is achieved in the reliability of the value of the pressure downstream of the filter estimated by the pressure estimating means, an improvement is also achieved in the reliability of the value of the differential pressure between the upstream and downstream sides of the filter calculated by using this value.
It should be noted that in a case where, for example, the pressure upstream of the filter detected by the pressure detecting means is detected as a gauge pressure that is a pressure defined relative to the atmospheric pressure, the pressure estimating means can directly use the value of this pressure loss as the pressure downstream of the filter.
The exhaust gas purification system may include a wastegate that connects between the upstream section and the downstream section of the exhaust throttle valve in the predetermined section and bypasses the exhaust throttle valve, and a wastegate valve that is provided in the wastegate and regulates a differential pressure between the upstream section and the downstream section of the exhaust throttle valve to be a predetermined pressure value or less, and the pressure estimating means may estimate the pressure downstream of the filter with the predetermined pressure value set as an upper limit value of the first pressure loss.
In the exhaust gas purification system configured as described above, the differential pressure between the upstream side and downstream side of the exhaust throttle valve is regulated by the wastegate valve to be the predetermined value or less. Therefore, although the first pressure loss varies as it is affected by the operating state of the internal combustion engine and the like, for example, the maximum value the first pressure loss can attain is the above-mentioned predetermined pressure value. In this regard, in a case where the differential pressure calculating device is applied to the above-mentioned exhaust gas purification system including the exhaust throttle valve and the wastegate valve, by adopting the above-mentioned configuration, the first pressure loss can be derived while taking the pressure regulating action of this wastegate valve into consideration, thereby making it possible to calculate the differential pressure between the upstream side and downstream side of the filter more accurately.
The pressure estimating means may estimate the pressure downstream of the filter to be higher as an intake air amount of the internal combustion engine becomes larger.
In an internal combustion engine, the larger the intake air amount, the larger the amount of exhaust gas flowing in the exhaust passage of the internal combustion engine, and hence the larger the total pressure loss in the exhaust passage on the downstream side of the filter. Further, as described above, since the value of the pressure downstream of the filter is larger than the atmospheric pressure by the total pressure loss in the exhaust passage on the downstream side of the filter, the larger the intake air amount, the higher the value of the pressure on the downstream side. Therefore, by adopting the above-mentioned configuration, the pressure estimating means can estimate the pressure downstream of the filter more accurately while taking the above-described relationship between the intake air amount and the pressure downstream of the filter into consideration. Further, an improvement is achieved in the reliability of the value of the differential pressure calculated on the basis of this estimated pressure as well.
The pressure estimating means may estimate the pressure downstream of the filter to be higher as exhaust gas temperature of the internal combustion engine becomes higher.
In an internal combustion engine, the higher exhast gas temperature causes the larger specific volume of exhaust gas flowing in the exhaust passage of the internal combustion engine, and hence the larger total pressure loss in the exhaust passage on the downstream side of the filter. Further, as described above, since the value of the pressure downstream of the filter is larger than the atmospheric pressure by the total pressure loss in the exhaust passage on the downstream side of the filter, the higher exhaust gas temperature causes the higher value of the pressure downstream of the filter. Therefore, by adopting the above-mentioned configuration, the pressure estimating means can estimate the pressure downstream of the filter more accurately while taking the above-described relationship between the exhaust gas temperature and the pressure downstream of the filter into consideration. Further, an improvement is achieved in the reliability of the value of the differential pressure calculated on the basis of this estimated pressure as well.
A second aspect of the present invention relates to a deposition amount estimating device for estimating a deposition amount of particulate matter. This deposition amount estimating device includes the differential pressure calculating device according to the first or second aspect mentioned above, and estimating means for estimating a deposition amount of particulate matter on the basis of the differential pressure of the filter calculated by the differential pressure calculating device.
According to the above-mentioned configuration, the deposition amount of PM can be estimated on the basis of the highly reliable differential pressure value that is calculated by the differential pressure calculating means for calculating a differential pressure between upstream and downstream sides of a filter according to the first or second aspect. Therefore, an improvement is achieved in the reliability of the value of the PM deposition amount estimated by the estimating means as well.
Further, for example, in the case of an exhaust gas purification system in which the timings of starting and terminating filter regeneration control are determined on the basis of the deposition amount of PM on the filter estimated in this way, these timings can be determined in an appropriate manner. That is, filter regeneration control can be performed in an appropriate manner.
An aspect according to a background art of the present invention relates to a differential pressure calculating device for calculating a differential pressure between an upstream section and a downstream section of a filter in an exhaust gas purification system, the exhaust gas purification system including a filter that is arranged in an exhaust passage of an internal combustion engine and traps particulate matter discharged from the internal combustion engine. This differential pressure calculating device includes: pressure detecting means for detecting a pressure upstream of the filter; pressure estimating means for estimating a pressure downstream of the filter from a total pressure loss in an exhaust passage on the downstream side of the filter; and calculating means for calculating a differential pressure between the upstream section and the downstream section of the filter from the detected pressure upstream of the filter and the estimated pressure downstream of the filter.
The pressure estimating means may estimate the pressure downstream of the filter by adding the total pressure loss to an atmospheric pressure.
In the exhaust gas purification system configured as mentioned above, the filter is communicated with the atmosphere via the exhaust passage connected to the downstream side of the filter. Therefore, the pressure downstream of the filter during operation of the internal combustion engine is a value that is larger than the atmospheric pressure by a total pressure loss that occurs as exhaust gas flows through the exhaust passage on the downstream side of the filter. In this regard, according to the above-mentioned configuration, the pressure estimating means estimates the pressure downstream of the filter by deriving this total pressure loss. Accordingly, the pressure downstream of the filter estimated in this way is consistent with the actual pressure downstream of the filter. That is, according to the above-mentioned configuration, since an improvement is achieved in the reliability of the value of the pressure downstream of the filter estimated by the pressure estimating means, an improvement is also achieved in the reliability of the value of the differential pressure between the upstream and downstream sides of the filter calculated by using this value.
It should be noted that in a case where, for example, the pressure upstream of the filter detected by the pressure detecting means is detected as a gauge pressure that is a pressure defined relative to the atmospheric pressure, the pressure estimating means may also estimate the pressure downstream of the filter as a gauge pressure. That is, in this case, the pressure estimating means can directly apply the value of this total pressure loss as the pressure downstream of the filter.
As can be appreciated from the above description, the pressure upstream of the filter is a value obtained by adding together a pressure loss in the filter and a total pressure loss in the exhaust passage on the downstream side of the filter.

### BRIEF DESCRIPTION OF THE DRAWINGS

The foregoing and further objects, features and advantages of the invention will become apparent from the following description of exemplary embodiments with reference to the accompanying drawings, wherein like numerals are used to represent like elements and wherein:
FIG 1 is a schematic diagram showing the configuration of a vehicle-mounted internal combustion engine incorporating an exhaust gas purification system to which a differential pressure calculating device for calculating a differential pressure between the upstream section and the downstream section of a filter, and a deposition amount estimating device for estimating the deposition amount of particulate matter on the filter according to the present invention are applied;
FIG. 2 is a time chart showing the deposition amount of PM with respect to the operating time of an internal combustion engine;
FIG 3 is a flow chart showing how the deposition amount of PM on a DPF is estimated;
FIG. 4 is a graph showing the relationship among the exhaust gas temperature, the intake air amount Ga, and the first pressure loss when an exhaust throttle valve is fully closed; and
FIG 5 is a graph showing the relationship among the exhaust gas temperature, the intake air amount Ga, and the second pressure loss.

### DETAILED DESCRIPTION OF THE PREFERRED EMBODIMENTS

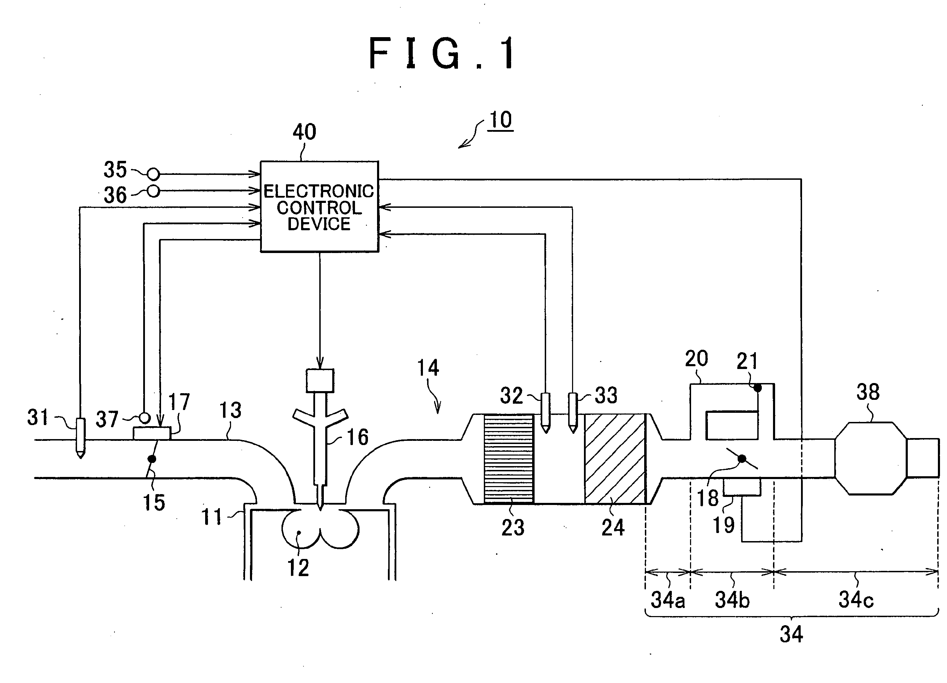

Referring to FIGs. 1 to 5, description will be given of an embodiment in which a differential pressure calculating device for calculating a differential pressure between the upstream section and the downstream section of a filter, and a deposition amount estimating device for estimating the deposition amount of particulate matter on the filter according to the present invention are applied to an exhaust gas purification system of a vehicle-mounted internal combustion engine which includes a filter for trapping particulate matter.

FIG. 1 is a schamtic diagram of the vehicle-mounted internal combustion engine incorporating the exhaust gas puritification system according to the present invention. An internal combustion engine 10 includes a combuation chamber 12 defined by each of cylinders 11, an intake passage 13 for feeding intake air to the combustion chamber 12, and an exhaust passage 14 through which exhaust gas generated by burning in the combustion chamber 12 is discharged.

The intake passage 13 is provided with an intake throttle valve 15 for variably controlling the channel area of the intake passage 13. The intake throttle valve 15 is driven by an actuator 17. The amount of air sucked into the combustion chamber 12 is regulated by controlling the valve opening of the intake throttle valve 15. The air sucked into the intake passage 13 is mixed with fuel injected from a fuel injection valve 16 provided in the combustion chamber 12, to form an air/fuel mixture that is burned in the combustion chamber 12. The intake passage 13 is also provided with an airflow meter 31 for detecting the amount of air sucked into the combustion chamber 12.

In the exhaust passage 14, a catalytic converter for oxidation (CCO) 23 for oxidazing and purifying noxious hydrocarbon (HC) and carbon monoxide (CO) contained in exhaust gas, and a diesel particulate filter (DPF) 24 for trapping particulate matter (PM) are arranged in this order. Exhaust gas generated by combustion in the combustion chamber 12 is fed to the CCO 23 and the DPF 24. The DPF 24 is formed of a porous material to trap PM in exhaust gas. In this embodiment, an oxidation catalyst for oxidazing HC and CO in exhaust gas is also carried on the DPF 24. Further, another catalytic converter for oxidation (not shown) different from the CCO 23 is provided on the upstream side of the CCO 23 in the exhaust gas 14. Further, so-called regeneration of the DPF 24 is carried out, whereby PM trapped by the DPF 24 is oxidazed (burned) for removal by a reaction induced by these oxidation catalysts.

A temperature sensor 32 and a pressure sensor 33 are provided in this order between the CCO 23 and the DPF 24 in the exhaust passage 14. The temperature sensor 32 detects the tempeurate of exhaust gas flowing in the exhaust passage 14, and the pressure sensor 33 detects the pressure upstream of the DPF 24. Further, the pressure sensor 33 is configured to detect a gauge pressure, that is, a pressure relative to the atmospheric pressure taken as "0", as its detection value.

The exhaust passage 14 is divided into three, that is, first to third sections 34a to 34c in an exhaust passage 34 on the downstream side of the DPF 24. It should be noted that although these sections 34a to 34c are formed continuously, they are defined as described above for the sake of convenience in describing characteristic features of the present invention.

An exhaust throttle valve 18 is provided in the second section 34b that is continuous to the downstream end of the DPF 24 via the first section 34a. That is, in this embodiment, this second section constitutes a predetermined section from the upstream section to the downstream section of the exhaust throttle valve 18. The exhaust vavle 18 is a switching valve that is switched between a fully open state and a fully closed state by an actuator 19.

In the second section 34b, there is also provided a wastegate 20 connecting between the upstream section and the downstream section of the exhaust throttle valve 18 and bypassing the exhaust throttle valve 18. A wastegate valve 21 for regulating the pressure upstream of the exhaust throttle valve 18 is provided to the wastegate 20. The wastegate valve 21 is a self-pressure-regulating valve that opens automatically for pressure regulation when a differential pressure between the upstream section and the downstream section of the wastegate valve 21, that is, a differential pressure between the upstream section and the downstream section of the exhaust throttle valve 18 exceeds a predetermined pressure value (for example, 150 [kPa]).

In the third section 34c continuous to the second section 34b, there is provided a muffler 38 for reducing noise due to exhaust gas. The downstream end of the third section 34c is directly communicated with the atmosphere. Various controls for the internal combustion engine 10 described above are carried out by an electronic control device 40. The electronic control device 40 includes a CPU for executing various kinds of arithematic processing related to engine cotnrol, a ROM for storing programs and data necessary for the control of the CPU, a RAM for temporarily storing the computation results of the CPU and the, an input/output port for inputting/outputting signals from/to the outside, and the like. Further, the electronic control device 40 includes functions as pressure estimating means for estimating a pressure PL downstream of the filter, and calculating means for calculting a differential pressure ΔP between the upstream section and the downstream section of the DPF 24 from the pressure PL downstream of the DPF 24 estimated by the pressure estimating means and a pressure PU upstream of the filter detected by the pressure sensor 33. Further, the electronic control device 40 includes a function as estimating means for estimating the deposition amount of PM on the DPF 24 on the basis of the differential pressure between the upstream section and the downstream section of the filter calculated by the calcuting means. That is, in this embodiment, the pressure sensor 33 and the electronic control device 40 constitute a differential pressure calculating device for calculating a differential pressure between the upstream section and the downstream section of the filter, and a deposition-amount estimating device for estimating the deposition amount of particulate matter on the filter.

In addition to the sensors described above, the input ports of the electronic control device 40 are connected to an NE sensor 35 for detecting the engine speed, an accelerator sensor 36 for detecting the amount of accelerator operation, an intake throttle sensor 37 for detecting the valve opening of the intake throttle valve 15. Further, the output ports of the electronic control device 40 are connected to drive circuits of the intake throtte valve 15, fuel injection valve 16, and exhaust thrttole valve 18.

The electronic control device 40 outputs command signals to the drive circuits of devices connected to the output port mentioned above in accordance with the engine operation state obtained from detection signals inputted from the sensors mentioned above. In this way, various controls, such as the control of the valve opening of the intake throttle valve 15, the control of fuel injection from the fuel injection valve 16, and the control of the opening and closing of the exhaust throttle valve 18, are carried out by the electronic control device 40.

In the exhaust gas purification system for the internal combustion engine 10 configured as described above, in order to remove PM trapped on the DPF 24, regeneration control of DPF 24 is carried out, whereby PM deposited on the DPF 24 is oxidized (burned) for purification. Hereinafter, this regeneration cotnrol of the DPF 24 will be described.

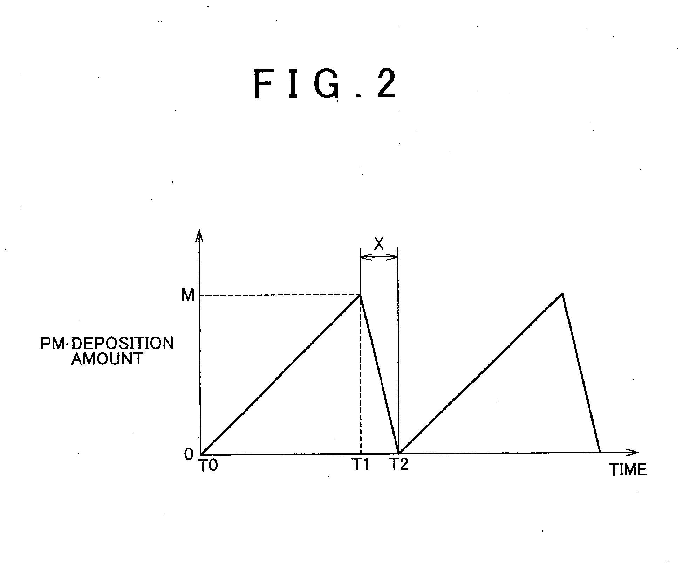

FIG. 2 is a time chart showing the deposition amount of PM with resect to the operating time of the internal combustion engine 10. As shown in FIG. 2, when operation of the internal combustion engine 10 is started at time T0, the deposition amount of PM trapped by the DPF 24 increases with the elapse of the operating time. Then, regeneration control of the DPF 24 by the electronic control device 40 is performed from time T1 at which the deposition amount of PM on the DPF 24 is estimated to have reached a predetermined amount M set in advance. Specifically, this regeneration control is performed by, for example, raising the exhaust gas temperature and the exhaust gas pressure through actuation of the exhaust throttle valve 18, and supplying unburned fuel components to the oxidation catalyst of the CCO 23 and the oxidation catalyst carried on the DPF 24, thereby activating the catalysts and burning PM around the catalysts through heat generation following the oxidation of unburned components in the exhaust gas or on the catalysts. It should be noted that the supply of unburned fuel components to the catalysts in the regeneration control mentioned above is performed by, for example, post-injection, which is a fuel injection operation during the exhaust storke, after fuel injection from the fuel injection valve 16 which contributes to driving of the internal combustion engine 10, for example. Then, the electronic control device 40 terminates this regeneration control of the DPF 24 at time T2 when the deposition amount of PM on the DPF 24 is estimated to have become substantially "0" due to this PM combustion. The electronic control device 40 is adapted to repeat the above-mentioned control to reduce the amount of PM discharged to the outside.

It should be noted that in the period X from the time T1 to time T2 during which regeneration control is executed, the exhaust throttle valve 18 is controlled in the manner as described below, for exmaple. That is, when a vehicle is in an accelerating state, the electronic control device 40 outputs a drive signal "OFF" to the exhaust throttle valve 18, and the exhaust throttle valve 18 is made fully open by the actuator 19. On the other hand, when the vehicle is in a constant-speed running state, a decelerating state, an idling state, or the like other than an accelerating state, the electronic control device 40 outputs a drive signal "ON" to the exhaust throttle valve 18, and the exhaust throttle valve 18 is made fuly closed by the actuator 19. That is, when the vehicle is in an accelerating state, the amount of air sucked into the combustion chamber 12 increases, so loss of acceleration performance of the vehicle is suppressed by opening the exhaust throttle valve 18. In this way, during the period X, regeneration control of the DPF 24 is performed by controlling the exhaust throttle valve 18 so as to open and close as appropriate in accordance with the operating state of the vehicle.

Then, the exhaust gas pressure rises as the exhaust throttle valve 18 is closed, so the amount of oxygen in the DPF 24 increases due to an increase in the amount of air. The rate of oxidation of PM thus increases. Further, since an exhaust resistance increases as the valve opening of the exhaust throttle valve 18 is narrowed, the fuel injection amount increases and the exhaust gas temperature also rises. This makes the oxidation catalysts of the CCO 23 and DPF 24 more activated, causing a increase in the rate of oxidation of PM. In this way, oxidation of PM depositioted on the DPF 24 is promoted upon closing the exhaust throttle valve 18, so the period X for which regeneration control of the DPF 24 is executed is reduced, and the amount of unburned fuel components supplied from the fuel injection valve 16 is suppressed to thereby make it possible to suppress deterioration of fuel efficiency.

As described above, the start and termination timings of regeneration control of the DPF 24 are determined by estimating the deposition amount of PM on the DPF 24. Hereinafter, description will be given of estimation of the deposition amount of PM performed by the electronic control device 40.

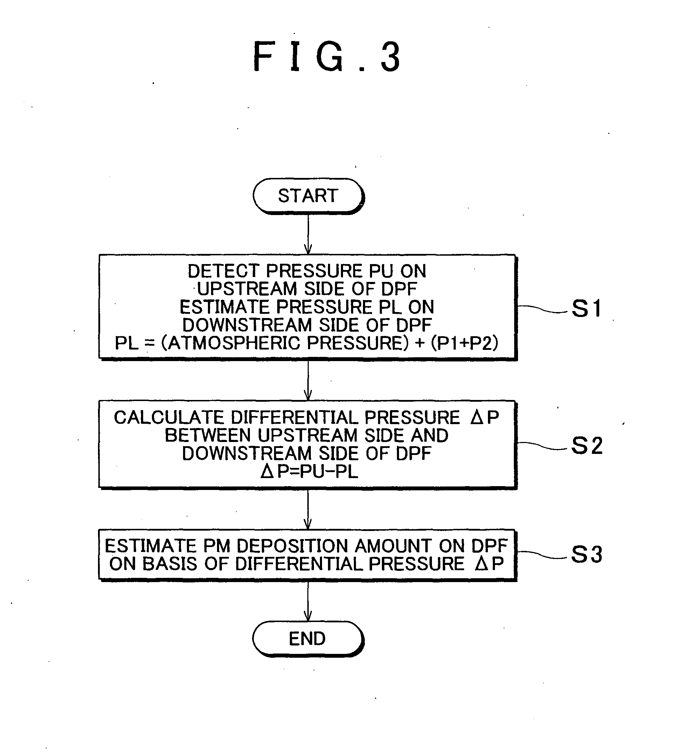

First, description will be given of how the regeneration control start timing is determined. The regeneration control start timing is determined by the electronic control device 40 calculating the differential pressure ΔP between the upstream section and the downstream section of the DPF 24 and estimating that the deposition amount of PM on the DPF 24 is the predetermined amount M when the calculated differential pressure ΔP has reached a predetermined value set in advance. The estimation of PM deposition amount performed to determine the start timing will be described with reference to FIGs. 3 to 5.

FIG. 3 is a flowchart showing a routine for estimating the deposition amount of PM on the DPF 24 executed by the electronic control device 40. As shown in FIG. 3, when the routine for estimating the deposition amount of PM on the DPF 24 is started, in step S1, the pressure PU upstream of the DPF 24 is detected by the pressure sensor 33, and the pressure PL downstream of the DPF 24 is detected by the pressure estimating means of the electronic control device 40.

In this case, as described above with reference to FIG. 1, the DPF 24 is communicated with the atmosphere via the exhaust passage 34 on the downstream side of the DPF 24. Thus, the pressure PL downstream of the DPF 24 is a value higher than the atmospheric pressure by the total pressure loss in the exhaust pasage 34 on the downstream side. Accordingly, the pressure estimating means estimates the pressure PL by adding this total pressure loss to the atmospheric pressure. At this time, according to a characteristic feature of this embodiment, a first pressure loss P1 that is a pressure loss in the second section 34b and a second pressure loss P2 that is a pressure loss in the first section 34a and the third section 34c are derived individually to derive this total pressure loss.

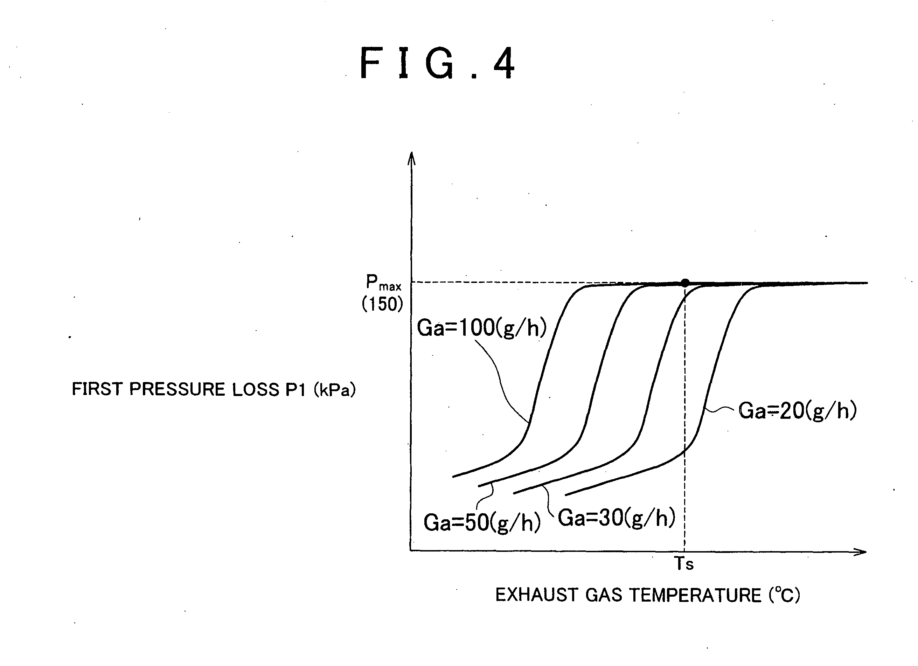

First, the first pressure loss P1 as a pressure loss in the second section 34b will be described. FIG. 4 is a graph showing the relationship among the exhaust gas temperature, the intake air amount Ga, and the first pressure loss P1 in the internal combustion engine 10 when the exhaust throttle valve 18 is fully closed. As shown in FIG. 4, provided that the intake air amount Ga is constant, the first pressure loss P1 when the exhaust throttle valve 18 is fully closed becomes larger as the exhaust gas temperature becomes higher because the specific volume of exhaust gas becomes larger, and provided that the exhaust gas temperature is constant, the first pressure loss P1 becomes larger as the intake air amount Ga increases. Further, since the differential pressure between the upstream section and the downstream section of the exhaust throttle valve 18 only rises to the above-mentioned predetermined pressure value due to the self-pressure-regulating action of the wastergate valve 21 as described above, although the first pressure loss P1 becomes larger with an increase in the intake air amount Ga or a rise in exhaust gas temperature, the upper limit value Pmax that the first pressure loss P1 can attain becomes the above-mentioned predetermined pressure value.

Likewise, although not shown, provided that the intake air amount Ga is constant, the first pressure loss P1 when the exhaust throttle valve 18 is fully open becomes larger as the exhaust gas temperature becomes higher, and provided that the exhaust gas temperature is constant, becomes larger as the intake air amount Ga increases. However, the first pressure loss P1 when the exhaust throttle valve 18 is fully open is a negligibly small value that can be practically regarded as 0 [kPa].

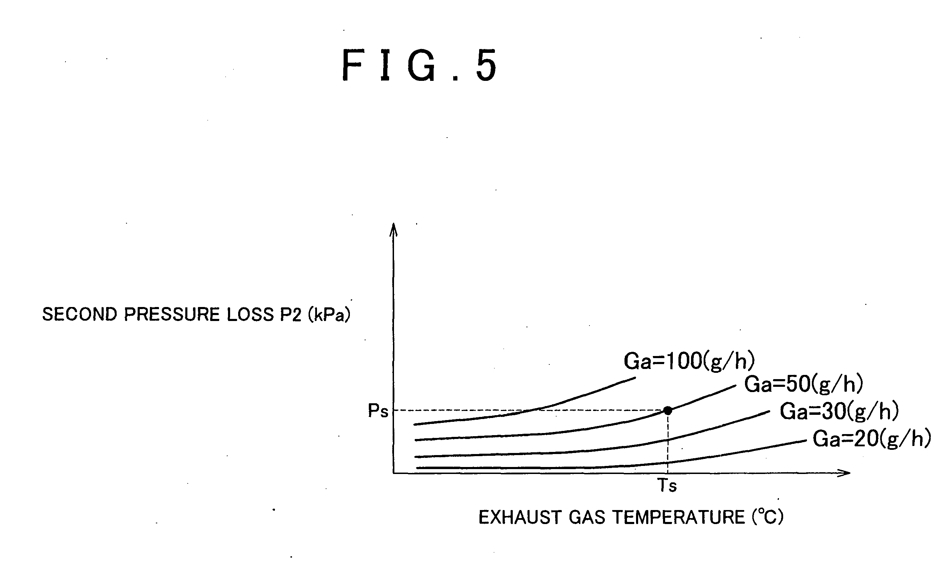

Next, the second pressure loss P2 as a pressure loss in the first setion 34a and the third section 34c will be described with reference to FIG. 5. FIG. 5 is a graph showing the relationship among the exhaust gas temperature, the intake air amount Ga, and the second pressure loss P2 in the internal combustion engine 10. As shown in FIG. 5, provided that the intake air amount Ga is constant, the second pressure loss P2 becomes larger as the exhaust gas temperature becomes higher because the specific volume of exhaust gas becomes larger, and provided that the exhaust gas temperature is constant, the second pressure loss P2 becomes larger as the intake air amount Ga increases. It should be noted that although no particular upper limit value is set for the second pressure loss P2, normally, the second pressure loss P2 can increase only to a value (for example, 60 [kPa]) lower than the above-mentioned predetermined pressure value.

It should be noted that when the exhaust throttle valve 18 changes from a fully open state to a fully closed state, it becomes temporarily difficult for exhaust gas to flow to the third section 34c. However, normally, the differential pressure between the upstream section and the downstream section of the exhaust throttle valve 18 soon reaches the above-mentioned predetermined pressure value, and exhaust gas is caused to flow to the third section 34c via the wastegate 20 by the action of the wastegate valve 21. Therefore, it can be said that practically no situations remain where exhaust gas does not flow to the third section 34c, and hence the relationship between the exhaust gas temperature, the intake air amount Ga, and the second pressure loss P2 is as shown in FIG. 5 irrespective of the actuation state of the exhaust throttle valve 18.

Since the exhaust gas temperature and the intake air amount Ga are respectively detected by the temperature sensor 32 and the airflow meter 31, the first pressure loss P1 and the second pressure loss P2 can be derived by applying the detection values of these sensors to the graphs of FIGs. 4 and 5, respectively. For instance, when the detected exhaust gas temperature is temperature Ts [°C] and the detected intake air amount Ga is 50 [g/h], the first pressure loss P1 is derived to be substantially 0 [kPa] when the exhaust throttle valve 18 is fully open. When the exhaust throttle valve 18 is fully closed, the first pressure loss P1 is derived to be a loss value Pmax [kPa] on the basis of FIG. 4, and the second pressure loss P2 is derived to be a loss value Ps [kPa] on the basis of FIG. 5. Therefore, the total pressure loss in the exhaust passage 34 on the downstream side of the DPF 24 becomes the loss value Ps [kPa] when the exhaust throttle valve 18 is fully open, and becomes a loss value (Pmax+Ps) when the exhaust throttle valve 18 is fully closed.

It should be noted that in this embodiment, although the exhaust throttle valve 18 becomes a fully closed state intermitteny during regeneration control of the DPF 24, at the time of determining the start timing of regeneration control, that is, when this regeneration control is not performed, the exhaust throttle valve 18 is in a fully open state, so the total pressure loss is derived by using solely the second pressure loss P2 shown in FIG. 5. However, for a vehicle employing the internal combustion engine 10 as described above, depending on the case, a configuration may be adopted in which the exhaust throttle valve 18 is fully closed even when this regeneration control is not being performed, for purposes such as warm-up of the internal combustion engine in cold climate areas, for example. In such cases, in determining the start timing of regeneration control, the total pressure loss may be derived by adding the first pressure loss P1 shown in FIG. 4 and the second pressure loss P2 shown in FIG. 5 together when the exhaust throttle valve 18 is fully closed, and the total pressure loss may be derived solely from the second pressure loss P2 when the exhaust throttle vavle 18 is fully open.

As described above, the pressure estimating means derives the total pressure loss in the exhaust passage 34 while taking the intake air amount Ga and the exhaust gas temperature, which serve as indicators of the operating state of the internal combustion engine 10, and the configuration of the exhaust passage 34 on the downstream side of the DPF 24 into consideration. Then, the pressure estimating means adds the total pressure loss thus derived to the atmospheric pressure, thereby estimating the pressure PL downstream of the DPF 24. In this case, while the pressure PL downstream of the DPF 24 is affected particularly by the actuation states of the exhaust throttle valve 18 and wastegate valve 21, in deriving the total pressure loss, the pressure loss in the second section 34b where these valves are provided is derived separately from that in the other sections 34a, 34c while taking the actuation states of these valves and the like into consideration. Since the total pressure loss of the exhaust passage 34 can be thus derived more acurately, the pressure PL downstream of the DPF 24, which is found by adding the thus derived total pressure loss to the atmospheric pressure, is a highly reliable value that is consistent with the current state. Further, as described above, basically, the first pressure loss P1 and the second pressure loss P2 become larger with an increase in intake air amount Ga and a rise in exhaust gas temperature. As a result, the pressure PL downstream of the DPF 24 is also estimated to be higher with an increase in intake air amount Ga and a rise in exhaust gas temperature.

It should be noted that since the pressure upstream of the DPF 24 detected by the pressure sensor 33 is detected as a gauge pressure which is a pressure defined relative to the atmospheric pressure, the pressure PL on the downstream side is also estimated as a gauge pressure. That is, the pressure estimating means can direclty apply the value of total pressure loss thus derived as the pressure PL downstream of the DPF 24.

Next, in step S2, the calculating means calculates the differential pressure ΔP between the upstream section and the downstream section of the DPF 24 by subtracting the pressure PL downstream of the DPF 24 estimatd by the pressure estimating means from the pressure PU upstream of the DPF 24 detected by the pressure snesor 33. Further, since an improvement is achieved in the reliability of the value of the pressure PL downstream of the DPF 24 estimated by the pressure estimating means as described above, an improvement is also achieved in the reliability of the value of the differential pressure ΔP between the upstream section and the downstream section of the DPF 24 calculated by using the estimated pressure value.

Then, in step S3, the estimating means of the electronic control device 40 estimates the deposition amount of PM on the basis of the differential pressure ΔP calculated in step S2. Specifically, the deposition amount of PM is estimated to have become the predetermined amount M set in advance when the differential pressure ΔP becomes a predetermined value. Regeneration control of the DPF 24 is thus started.

The termination timing of the regeneration control of the DPF 24 is determined as follows. That is, the cumulative treatment amount of PM is calculated from the oxidation (combustion) rate of PM and the regeneration time of the DPF 24, and the deposition amount of PM is estimated to be substantally "0" when the PM deposition amount M at the start of this regeneration control and this cumulative PM treatment amount become substantially equal.

It should be noted that also the termination timing of regeneration control may be determined by calculating the differential pressure ΔP by the electronic control device 40, and estimating the deposition amount of PM on the DPF 24 on the basis of this differential pressure ΔP. That is, the electronic control device 40 may estimate the deposition amount on the DPF 24 to have become "0" when the calculated differential pressure ΔP becomes a predetermined value or less, thus terminating this regeneration control. Further, since the opening and closing of the exhaust throttle valve 18 are repeated during regeneration control of the DPF 24 as described above, when the exhaust throttle valve 18 is fully open, the total pressure loss is derived by using solely the second pressure loss P2 shown in FIG. 5, and when the exhaust throttle valve 18 is fully closed, the total pressure loss is derived by using a value obtained by adding the pressure loss P1 shown in FIG. 4 and the pressure loss P2 shown in FIG. 5 together. It should be noted that the calculation of the differential pressure ΔP and the estimation of the deposition amount of PM on the DPF 24 may be performed only during one of the fully open state of the exhaust throttle valve 18 or the fully closed state of the exhaust throttle valve 18.

The differential pressure calculating device for calculating a differential pressure between the upstream section and the downstream section of a filter, and the deposition amount estimating device for estimating the deposition amount of particulate matter on the filter according to the above-mentioned embodiment provide the following effects.

(1) The differential pressure calculating device according to this embodiment is adapted to calculate the differential pressure ΔP between the upstream section and the downstream section of the DPF 24 from the pressure PU upstream of the DPF 24 detected by the pressure sensor 33, and the pressure PL downstream of the DPF 24 estimated by the pressure estimating means by deriving the total pressure loss in the exhaust passage 34 on the downstream side of the DPF 24. In particular, since the exhaust throttle valve 18 is provided in the exhaust passage 34 on the downstream side of the DPF 24 in this embodiment, this total pressure loss is derived by individually deriving the first pressure loss P1 representing a pressure loss in the second section 34b where the exhaust throttle valve 18 is provided, and the second pressure loss P2 representing a pressure loss in the other sections 34a, 34c. Since the total pressure loss can be thus accurately derived in accordance with the characteristics and actuation state of the exhaust throttle valve 18, the value of the pressure downstream of the DPF 24 found by adding this total pressure loss to the atmospheric pressure is more consistent with the reality. That is, since an improvement is achieved in the reliabity of the value of the pressure PL downstream of the filter estimated by the pressure estimating means, an improvement is also achieved in the reliability of the value of the differential pressure ΔP between the upstream section and the downstream section of the filter calculated on th basis of this estimated pressure value.

(2) The exhaust gas purification system according to this embodiment includes the wastegate 20 bypassing the exhaust throttle valve 18, and the wastegate valve 21 that is provided in the wastegate 20 and regulates a differential pressure between the upstream section and the downstream section of the exhaust throttle valve 18 to a predetermined pressure value. The pressure estimating means of the differential pressure calculating device sets this predetermined pressure value as the upper limit value of the first pressure loss P1. Since the first pressure loss P1 can be thus derived while taking the pressure regulating action of the wastegate valve 21 into consideration, the pressure PL downstream of the DPF 24 can be estimated more accurately, thereby making it possible to calculate the differential pressure ΔP between the upstream section and the downstream section of the DPF 24 more accurately.

(3) In the differential pressure calculating device according to this embodiment, the pressure estimating means estimates the pressure downstream of the DPF 24 to be higher as the intake air amount Ga to the internal combustion engine 10 becomes larger, and estimates the pressure downstream of the DPF 24 to be higher as the exhaust gas temperature of the internal combustion engine 10 becomes higher. That is, the influence of the operating state of the internal combustion engine 10 on the pressure PL downstream of a filter is taken into consideration in estimating the pressure PL downstream of the filter. Therefore, an improvement is achieved in the reliability of the value of the pressure PL, and an improvement is also achieved in the reliability of the value of the differential pressure ΔP calculated on the basis of this estimated pressure value.

(4) In the differential pressure calculating device according to this embodiment, the pressure sensor 33 is adapted to detect the pressure upstream of the DPF 24 as a gauge pressure. It is thus possible to directly apply the value of total pressure loss as the pressure downstream of the DPF 24 when calculating the differential pressure ΔP by the calculating means. That is, in calculating the differential pressure ΔP, it is not necessary to detect the atmospheric pressure as an absolute pressure with the vacuum defined as "0", and the procedure of adding the total pressure loss to the atmospheric pressure can be omitted with respect to the pressure PL downstream of the DPF 24, thereby achieving simplification of the estimation procedure.

(5) The deposition amount estimating device according to this embodiment includes the differential pressure calculating device described above, and estimates the deposition amount of PM on the basis of the differential pressure ΔP calculated by the differential pressure calculating device. Since the deposition amount of PM can be thus estimated on the basis of a highly reliable differential pressure value cauclated by the differential pressure calculating device, an improvement is also achieved in the reliability of the value of PM deposition amount estimated by the estimating means.

In the exhaust gas purification system according to this embodiment, the timing of starting regeneration control of the DPF 24 is determined on the basis of the deposition amount of PM estimated in this way. This makes it possible to prevent a situation where filter regeneration control is started unnecessarily even when there is relatively little deposition of PM on the DPF 24, or a situation where filter regeneration is not started even when the deposition amount of PM on the DPF 24 has become excessively large. In the case of a configuration in which the timing of terminating regeneration control of the DPF 24 is determined on the basis of the PM deposition amount estimated in the manner as described above, it is possible to prevent a situation where this regeneration control is terminated even though the DPF 24 has not been fully regenerated, or a situation where this regeneration control is continued even though the DPF 24 has been fully regenerated. That is, since regeneration control of the DPF 24 can be started or terminated at appropriate timing, regeneration of the DPF 24 can be performed with reliability.

It should be noted that the above-mentioned embodimet may be modified as follows.

In the above-mentioned embodiment, the channel cross-sectional area of the exhaust passage 14 is varied by switching of the exhaust throttle valve 18 between a fully open state and a fully closed state. However, the exhaust throttle valve 18 may be configured as a valve whose valve opening can be set freely in an arbitrary manner. In this case as well, the differential pressure ΔP may be calculated by, for example, creating as appropriate the graph as shown in FIG. 4 for deriving the first pressure loss P1 in accordance with the valve opening of the exhaust throttle valve 18.

In the above-mentioned embodiment, supply of unburned components is performed by post-injection from the fuel injection valve 16 or the like. However, it is also possible to provide an addition valve upstream of the DPF 24 in the exhaust passage 14, and supply unburned components from that addition valve.

The above-mentioned embodiment uses the self-pressure-regulating wastegate valve 21 which automatically opens for pressure regulation when the differential pressure between the upstream section and the downstream section of the exhaust throttle valve 18 exceeds a predetermined pressure value. However, it is also possible to use an electromagnetic wastegate valve which is opened and closed on the basis of a drive signal of the electronic control device 40.

In the above-mentioned embodiment, the pressure detecting means uses the pressure sensor 33 that detects a gauge pressure, which is a pressure relative to the atmospheric pressure defined as "0". However, it is also possible to use a pressure sensor that detects an absolute pressure that is a pressure relative to the vacuum defined as "0".

In the above-mentioned embodiment, the temperature sensor 32 for detecting the exhaust gas temperature is provided between the CCO 23 and the DPF 24. However, this temperature sensor 32 may be provided, for example, on the upstream side of the CCO 23 or on the downstream side of the DPF 24. Likewise, the pressure sensor 33 for detecting the pressure upstream of the DPF 24 may be provided upstream of the CCO 23, for example.

In the above-mentioned embodiment, an oxidation catalyst is carried on the DPF 24. However, a catalyst may not be carried on the DPF 24, or in the case where a catalyst is carried on the DPF 24 as in the above-mentioned embodiment, the CCO 23 may be omitted. Further, a catalytic converter (not shown) provided further upstream of the CCO 23 may be omitted as well.

In the above-mentioned embodiment, as shown in FIGs. 4 and 5 described above, the relationship between the two indicators of the operating state of the internal combustion engine, that is, the intake air amount Ga and the exhaust gas temperature, and the first and second pressure losses P1, P2 is set in advance. However, the relationship between one of these indicators and each of the pressure losses P1, P2 may be set in advance. Even when the pressure downstream of the DPF 24 is estimated from the relationship between one of the two indicators and each of the pressure losses P1, P2 in this way, the reliability of the value thus estimated is at least higher than that of the pressure downsteram of the DPF 24 which is estimated without taking the operating state of the internal combustion engine 10 into consideration whatsoever as in the related art. It should be noted that since FIGs. 4 and 5 are meant to conceptually illustrate these relationships, there is actually no need to create these graphs, and each of the pressure losses P1, P2 may be derived from a calculation formula or the like based on this concept.

In the above-mentioned embodiment, the pressure estimating means derives the total pressure loss after deriving the first pressure loss P1 and the second pressure loss P2. However, the total pressure loss may be directly derived by omitting the procedure of deriving the pressure losses P1, P2 with respect to individual sections. In particular, although the exhaust gas purification system includes the exhaust throttle valve 18 in the above-mentioned embodiment, the total pressure loss may be directly derived in this way irrespective of the presence or absence of the exhaust thottle vavle 18.

In the above-mentioned embodiment, when the exhaust throttle valve 18 is fully open, the pressure estimating means regards the first pressure loss P1 as being substantially "0", and derives the total pressure loss solely from the second pressure loss P2. However, even when the exhaust throttle valve 18 is fully open, the value of the first pressure loss P1 may be accurately derived and added together with the second pressure loss P2 to derive the total pressure loss. In a case where a part that would cause the pressure loss to vary depending on the actuation state is provided in the exhaust passage 34 on the downstream side of the DPF 24, the pressure loss in a predetermined section from the upstream to downstream of this part, and the pressure loss in sections other than the predetermined section may be individually derived to derive the total pressure loss.

In the above-mentioned embodiment, the pressure estimating means derives the first pressure loss P1 with the second section 34b taken as the predetermined section. However, the pressure estimating means may derive the first pressure loss P1 with the section from the downstream end of the DPF 24 to the downstream side of the exhaust throttle valve 18, that is, the first and second sections 34a, 34b as the predetermined section.

## Claims

1. A differential pressure calculating device for calculating a differential pressure between an upstream section and a downstream section of a filter in an exhaust gas purification system, the exhaust gas purification system including a filter (24) that is arranged in an exhaust passage of an internal combustion engine and traps particulate matter discharged from the internal combustion engine, and an exhaust throttle valve (18) that is arranged on the downstream side of the filter in the exhaust passage and variably controls a channel cross-sectional area of the exhaust passage, and
pressure detecting means (33) for detecting a pressure upstream of the filter (24); **characterized by** comprising:
pressure estimating means for estimating a pressure downstream of the filter from a total pressure loss in an exhaust passage (34) on the downstream side of the filter by individually deriving a first pressure loss and a second pressure loss, the first pressure loss being a pressure loss in a predetermined section (34b) from the upstream section to the downstream section of the exhaust throttle valve (18) in the exhaust passage on the downstream side of the filter (24), the second pressure loss being a pressure loss in a section other than the predetermined section in the exhaust passage on the downstream side of the filter; and
calculating means for calculating a differential pressure between the upstream section and the downstream section of the filter from the detected pressure upstream of the filter and the estimated pressure downstream of the filter.

2. The differential pressure calculating device according to claim 1, wherein:
the pressure estimating means estimates the pressure downstream of the filter by adding the total pressure loss to an atmospheric pressure.

3. The differential pressure calculating device according to claim 1 or 2, wherein:
the exhaust gas purification system includes a wastegate (20) that connects between the upstream section and the downstream section of the exhaust throttle valve (18) in the predetermined section (34b) and bypasses the exhaust throttle valve (18), and a wastegate valve (21) that is provided in the wastegate and regulates a differential pressure between the upstream section and the downstream section of the exhaust throttle valve to be a predetermined pressure value or less; and
the pressure estimating means estimates the pressure downstream of the filter with the predetermined pressure value set as an upper limit value of the first pressure loss.

4. The differential pressure calculating device according to any one of claims 1 to 3, wherein:
the pressure estimating means estimates the pressure downstream of the filter (24) to be higher as an intake air amount of the internal combustion engine becomes larger.

5. The differential pressure calculating device according to any one of claims 1 to 4, wherein:
the pressure estimating means estimates the pressure downstream of the filter (24) to be higher as exhaust gas temperature of the internal combustion engine becomes higher.

6. The differential pressure calculating device according to any one of claims 1 to 5, wherein:
the differential pressure is obtained using a map.

7. A deposition amount estimating device for estimating a deposition amount of particulate matter on a filter, **characterized by** comprising:
the differential pressure calculating device according to any one of claims 1 to 6; and
estimating means for estimating a deposition amount of particulate matter on the basis of the differential pressure of the filter (24) calculated by the differential pressure calculating device.

8. A method of calculating a differential pressure between an upstream section and a downstream section of a filter (24) that is arranged in an exhaust passage of an internal combustion engine and traps particulate matter discharged from the internal combustion engine, comprising the step of
detecting a pressure upstream of the filter (24); the method is **characterized by** further comprising the steps of:
estimating a pressure downstream of the filter (24) from a total pressure loss in an exhaust passage (34) on the downstream side of the filter (24) by individually deriving a first pressure loss and a second pressure loss, the first pressure loss being a pressure loss in a predetermined section (34b) from the upstream section to the downstream section of a exhaust throttle valve (18) in the exhaust passage on the downstream side of the filter (24), the second pressure loss being a pressure loss in a section other than the predetermined section in the exhaust passage on the downstream side of the filter; and
calculating a differential pressure between an upstream section and a downstream section of the filter from the detected pressure upstream of the filter and the estimated pressure downstream of the filter.

9. A deposition amount estimating method for estimating a deposition amount of particulate matter on a filter, **characterized by** comprising the step of estimating a deposition amount of particulate matter on the basis of the differential pressure calculated by the method according to claim 8.

## Patentansprüche

1. Differenzdruckberechnungsvorrichtung zur Berechnung eines Differenzdrucks zwischen einem Abschnitt stromaufwärts eines Filters und einem Abschnitt stromabwärts des Filters in einem Abgasreinigungssystem, wobei das Abgasreinigungssystem enthält:
einen Filter (24), der in einer Abgasleitung eines Verbrennungsmotors angeordnet ist und vom Verbrennungsmotor abgegebene Partikel auffängt;
eine Abgasdrosselklappe (18), welche stromabwärts des Filters in der Abgasleitung angeordnet ist und variabel den Öffnungsquerschnitt der Abgasleitung steuert; und
eine Druckerfassungseinrichtung (33) zum Erfassen eines Drucks stromaufwärts des Filters (24);
**dadurch gekennzeichnet, dass** die Vorrichtung ferner aufweist:
eine Druckabschätzeinrichtung zum Abschätzen eines Drucks stromabwärts des Filters (24) aus einem Gesamtdruckverlust in einer Abgasleitung (34) stromabwärts des Filters (24), indem individuell ein erster Druckverlust und ein zweiter Druckverlust hergeleitet werden, wobei der erste Druckverlust ein Druckverlust in einem vorbestimmten Abschnitt (34b) von dem Abschnitt stromaufwärts zum Abschnitt stromabwärts der Abgasdrosselklappe (18) in der Abgasleistung stromabwärts des Filters (24) ist und der zweite Druckverlust ein Druckverlust in einem anderen als dem vorbestimmten Abschnitt in der Abgasleistung stromabwärts des Filters (24) ist; und
eine Berechnungseinrichtung zum Berechnen einer Druckdifferenz zwischen dem Abschnitt stromaufwärts und dem Abschnitt stromabwärts des Filters aus dem erfassten Druck stromaufwärts des Filters und dem abgeschätzten Druck stromabwärts des Filters.

2. Differenzdruckberechnungsvorrichtung gemäß Anspruch 1, wobei die Druckabschätzeinrichtung den Druck stromabwärts des Filter durch Addition von Gesamtdruckverlust und Luftdruck abschätzt.

3. Differenzdruckberechnungsvorrichtung gemäß Anspruch 1 oder 2, wobei das Abgasreinigungssystem enthält:
einen Bypass bzw. Wastegate (20), welches den Abschnitt stromaufwärts und den Abschnitt stromabwärts der Abgasdrosselklappe (18) in dem vorbestimmten Abschnitt (34b) verbindet und die Abgasdrosselklappe (18) umgeht; und
ein Bypass- bzw. Wastegate-Ventil (21), welches in dem Bypass bzw. Wastegate vorgesehen ist und einen Differenzdruck zwischen dem Abschnitt stromaufwärts und dem Abschnitt stromabwärts der Abgasdrosselklappe so regelt, dass er gleich oder kleiner als ein vorbestimmter Druckwert ist; und wobei
die Druckabschätzeinrichtung den Druck stromabwärts des Filters mit dem vorbestimmten Druckwert, der als Obergrenze des ersten Druckverlustes festgelegt ist, abschätzt.

4. Differenzdruckberechnungsvorrichtung gemäß einem der Ansprüche 1 bis 3, wobei die Druckabschätzeinrichtung den Druck stromabwärts des Filters (24) mit Zunahme einer Luftansaugmenge des Verbrennungsmotors höher abschätzt.

5. Differenzdruckberechnungsvorrichtung gemäß einem der Ansprüche 1 bis 4, wobei die Druckabschätzeinrichtung den Druck stromabwärts des Filters (24) mit Zunahme einer Abgastemperatur des Verbrennungsmotors höher abschätzt.

6. Differenzdruckberechnungsvorrichtung gemäß einem der Ansprüche 1 bis 5, wobei der Differenzdruck mit Hilfe eines Kennfelds ermittelt wird.

7. Ablagerungsmengenabschätzeinrichtung zum Abschätzen einer Ablagerungsmenge von Partikeln an einem Filter, **gekennzeichnet durch**:
die Differenzdruckberechnungsvorrichtung nach einem der Ansprüche 1 bis 6; und
einer Abschätzeinrichtung zum Abschätzen einer Ablagerungsmenge von Partikel auf der Basis des **durch** die Differenzdruckberechnungsvorrichtung berechneten Differenzdrucks des Filters (24).

8. Verfahren zum Berechnen eines Differenzdrucks zwischen einem Abschnitt stromaufwärts und einem Abschnitt stromabwärts eines Filters (24), der in einer Abgasleitung eines Verbrennungsmotors angeordnet ist und vom Verbrennungsmotor abgegebene Partikel auffängt, mit dem Schritt:
Erfassen eines Drucks stromaufwärts des Filters (24),
ferner **gekennzeichnet durch** die Schritte:
Abschätzen eines Drucks stromabwärts des Filters (24) aus einem Gesamtdruckverlust in einer Abgasleitung (34) stromabwärts des Filters (24), indem individuell ein erster Druckverlust und ein zweiter Druckverlust hergeleitet werden, wobei der erste Druckverlust ein Druckverlust in einem vorbestimmten Abschnitt (34b) von dem Abschnitt stromaufwärts zum Abschnitt stromabwärts einer Abgasdrosselklappe (18) in der Abgasleistung stromabwärts des Filters (24) ist und der zweite Druckverlust ein Druckverlust in einem anderen als dem vorbestimmten Abschnitt in der Abgasleistung stromabwärts des Filters (24) ist; und
Berechnen einer Druckdifferenz zwischen einem Abschnitt stromaufwärts und einem Abschnitt stromabwärts des Filters aus dem erfassten Druck stromaufwärts des Filters und dem abgeschätzten Druck stromabwärts des Filters.

9. Ablagerungsmengenabschätzverfahren zum Abschätzen einer Ablagerungsmenge von Partikel an einem Filter, **gekennzeichnet durch** den Schritt:
Abschätzen einer Ablagerungsmenge von Partikeln auf der Basis des **durch** das Verfahren nach Anspruch 8 berechneten Differenzdrucks.

## Revendications

1. Dispositif de calcul de pression différentielle pour calculer une pression différentielle entre une section amont et une section aval d'un filtre dans un système de purification des gaz d'échappement, le système de purification des gaz d'échappement comprenant un filtre (24) qui est agencé dans un passage d'échappement d'un moteur à combustion interne et qui piège les matières particulaires refoulées du moteur à combustion interne, et un papillon des gaz d'échappement (18) qui est agencé sur le côté aval du filtre dans le passage d'échappement et qui régule de manière variable une superficie de la section transversale d'un canal du passage d'échappement, et
un moyen de détection de pression (33) pour détecter une pression en amont du filtre (24); **caractérisé par** le fait de comprendre:
un moyen d'estimation de pression pour estimer une pression en aval du filtre d'après une perte totale de pression dans un passage d'échappement (34) sur le côté aval du filtre en dérivant, de manière individuelle, une première perte de pression et une deuxième perte de pression, la première perte de pression étant une perte de pression dans une section prédéterminée (34b) en partant de la section amont vers la section aval du papillon des gaz d'échappement (18) dans le passage d'échappement sur le côté aval du filtre (24), la deuxième perte de pression étant une perte de pression dans une section autre que la section prédéterminée dans le passage d'échappement sur le côté aval du filtre; et
un moyen de calcul pour calculer une pression différentielle entre la section amont et la section aval du filtre d'après la pression détectée en amont du filtre et la pression estimée en aval du filtre.

2. Dispositif de calcul d'une pression différentielle selon la revendication 1, dans lequel:
le moyen d'estimation de pression estime la pression en aval du filtre en ajoutant la perte totale de pression à la pression atmosphérique.

3. Dispositif de calcul d'une pression différentielle selon la revendication 1 ou 2, dans lequel:
le système de purification des gaz d'échappement comprend une décharge (20) des gaz d'échappement qui relie la section amont à la section aval du papillon des gaz d'échappement (18) dans la section prédéterminée (34b) et contourne le papillon des gaz d'échappement (18), et une soupape (21) de décharge des gaz d'échappement qui est pourvue dans la décharge des gaz d'échappement et qui régule une pression différentielle entre la section amont et la section aval du papillon des gaz d'échappement pour que ce soit une valeur de pression prédéterminée ou moins; et
le moyen d'estimation de pression estime la pression en aval du filtre avec la valeur de pression prédéterminée établie comme valeur limite supérieure de la première perte de pression.

4. Dispositif de calcul d'une pression différentielle selon l'une quelconque des revendications 1 à 3, dans lequel
le moyen d'estimation de pression estime la pression en aval du filtre (24) pour qu'elle soit plus élevée à mesure qu'une quantité d'air d'admission du moteur à combustion interne augmente.

5. Dispositif de calcul d'une pression différentielle selon l'une quelconque des revendications 1 à 4, dans lequel
le moyen d'estimation de pression estime la pression en aval du filtre (24) pour qu'elle soit plus élevée à mesure que la température du gaz d'échappement du moteur à combustion interne augmente.

6. Dispositif de calcul d'une pression différentielle selon l'une quelconque des revendications 1 à 5, dans lequel:
la pression différentielle est obtenue en utilisant une carte.

7. Dispositif d'estimation d'une quantité de dépôt pour estimer une quantité de dépôt des matières particulaires sur un filtre, **caractérisé par** le fait de comprendre:
le dispositif de calcul d'une pression différentielle selon l'une quelconque des revendications 1 à 6; et
un moyen d'estimation pour estimer une quantité de dépôt de matières particulaires sur la base de la pression différentielle du filtre (24) calculée par le dispositif de calcul de la pression différentielle.

8. Procédé pour calculer une pression différentielle entre une section amont et une section aval d'un filtre (24) qui est agencé dans un passage d'échappement d'un moteur à combustion interne et qui piège les matières particulaires refoulées du moteur à combustion interne, comprenant les étapes consistant à:
détecter une pression en amont du filtre (24); le procédé **caractérisé par** le fait de comprendre en plus les étapes consistant à:
estimer une pression en aval du filtre (24) d'après une perte totale de pression dans un passage d'échappement (34) sur le côté aval du filtre (24) en dérivant de manière individuelle une première perte de pression et une deuxième perte de pression, la première perte de pression étant une perte de pression dans une section prédéterminée (34b) en partant de la section amont vers la section aval d'un papillon des gaz d'échappement (18) dans le passage d'échappement sur le côté aval du filtre (24), la deuxième perte de pression étant une perte de pression dans une section autre que la section prédéterminée dans le passage d'échappement sur le côté aval du filtre; et
calculer une pression différentielle entre une section amont et une section aval du filtre d'après la pression détectée en amont du filtre et la pression détectée en aval du filtre.

9. Procédé d'estimation d'une quantité de dépôt pour estimer une quantité de dépôt des matières particulaires sur un filtre, **caractérisé par** le fait de comprendre l'étape d'estimation d'une quantité de dépôt des matières particulaires sur la base de la pression différentielle calculée par le procédé selon la revendication 8.
